# EUROPEAN PATENT SPECIFICATION

(11) **EP 3 235 673 B1**
(45) Date of publication and mention of the grant of the patent: **06.10.2021**
(21) Application number: 17166147.3
(22) Date of filing: 12.04.2017
(51) Int. Cl.: B60K 11/08

(54) **ACTIVE GRILLE SHUTTER MULTI PART MODULAR FRAME**
MEHRTEILIGER MODULARER RAHMEN FÜR EINE AKTIVE GRILLBLENDE
STRUCTURE MODULAIRE EN PLUSIEURS PARTIES DE VOLET DE GRILLE ACTIVE

(30) Priority: 22.04.2016 US 201615136180
(43) Date of publication of application: 25.10.2017
(73) Proprietor: Magna International Inc., Aurora, ON L4G 7K1 (CA)
(72) Inventor: MANHIRE, Jeffrey Bruce, Rochester, MI 48306 (US); POVINELLI, Antony J., Romeo, MI 48065 (US); RUPPERT, Benjamin R., Chesterfield, MI 48051 (US); MATTHEWS, Martin R., Troy, MI 48083 (US)
(74) Representative: Glawe, Delfs, Moll

(56) References cited:
- WO-A1-2014/036432
- WO-A1-2015/142582
- US-A1- 2014 216 834

## Description

### FIELD OF THE INVENTION

The present invention relates to an active grille shutter arrangement having a modular frame for use in a vehicle.

### BACKGROUND OF THE INVENTION

Various attempts have been made to optimize the cooling of various automobile parts. Some of the various devices developed have been designed to control the air flow throughout the engine compartment of the automobile such that the desired amount of heat is transferred away from the engine, transmission, and other components which generate heat, in order to maintain an optimal operating temperature.

However, it is also desirable to bring the engine up to the normal operating temperature as soon as possible after engine start-up. When the engine is substantially the same temperature as the surrounding environment and is turned on, the engine is the least fuel efficient (especially during start-up and the temperature of the surrounding environment is cold). The reduced fuel efficiency is why it is considered desirable to bring the engine up to the optimal operating temperature very quickly. Under these conditions, it is not desirable to remove heat away from the engine and the various components surrounding the engine, and therefore devices designed to control air flow around the engine are more beneficially used if they do not remove heat away from the engine at start-up.

Active grille systems that have been developed implement a frame is typically molded as a complete part. During assembly, the frame and/or the vanes have to be distorted in order to assemble the complete system onto the one piece frame. Additionally, the one piece frame has a low shipping density as it is mostly empty space. Furthermore, if an active grille system has two variants with either additional vanes or a base air flow, a complete new frame must be molded and shipped. It is therefore desirable to provide a frame that is multiple separate molded parts instead of one complete molding. This will aid in the assembly of the active grille shutter system without having to distort the frames or the vanes. Additionally, having multiple components accommodates the various variants that can be needed depending on the particular application. Lastly, having a multi-piece frame increases the shipping density since the various components can be stacked more closely together.

WO 2014/036432 A1 discloses an active grille shutter arrangement having an assembled modular frame. The assembled modular frame includes an upper frame portion and a lower frame portion each having a first end and a second end. A first end cap is connectable to both the first end of the upper frame portion and the first end of the lower frame portion. The connection between the first end of the upper frame portion and the first end of the lower frame portion includes an upper bar end joint formed on the front end of the upper frame portion and a lower bar end joint formed on the first end of the lower frame portion. The upper bar end joint slides into an upper bar end cap joint formed on the first end cap and the lower bar end joint slides into a lower end cap joint formed on the first end cap.

### SUMMARY OF THE INVENTION

The present invention is directed to an active grille shutter arrangement having a modular frame comprising the features of claim 1 or claim 4.

Further areas of applicability of the present invention will become apparent from the detailed description provided hereinafter.

### BRIEF DESCRIPTION OF THE DRAWINGS

The present invention will become more fully understood from the detailed description and the accompanying drawings, wherein:
The embodiments of figures 1 to 8 are not part of the invention;
Fig. 1 is an exploded angled perspective view of an active grille shutter arrangement;
Fig. 2A is an angled perspective view of the active grille arrangement;
Fig. 2B is an angled perspective view of the active grille arrangement;
Fig. 2C is an angled perspective view of the active grille arrangement;
Fig. 3A is a front angled perspective view of the active grille arrangement;
Fig. 3B is a rear angled perspective view of the active grille arrangement;
Fig. 4 is an exploded rear perspective view of an alternate embodiment of the modular frame;
Fig. 5 is an enlarged perspective view of an end joint of the upper frame portion;
Fig. 6 is an enlarged perspective view of the assembled end joint and end cap joint;
Fig. 7A is an exploded perspective angled view of an interlocking dovetail joint on the upper frame portion with the upper portion of the motor housing exploded from the interlocking dovetail joint;
Fig. 7B is an enlarged perspective view of the motor housing assembled to the interlocking dovetail joint of the upper frame portion;
Figs. 8A is a perspective view showing the assembly of the modular frame;
Figs. 8B is a perspective view showing the assembly of the modular frame;
Figs. 8C is a perspective view showing the assembly of the modular frame;
Figs. 8D is a perspective view showing the assembly of the modular frame;
Fig. 9 is an exploded perspective view of an embodiment of the invention;
Fig. 10 is an exploded perspective view of a second embodiment of the invention;
Fig. 11 is an exploded perspective view of a third embodiment of the invention;
Fig. 12 is an exploded perspective view of a fourth embodiment of the invention;
Fig. 13 is an exploded perspective view of a fifth embodiment of the invention including an alternate method of assembly; and
Fig. 14 is an exploded perspective view of an sixth embodiment of the invention.

### DETAILED DESCRIPTION OF THE PREFERRED EMBODIMENTS

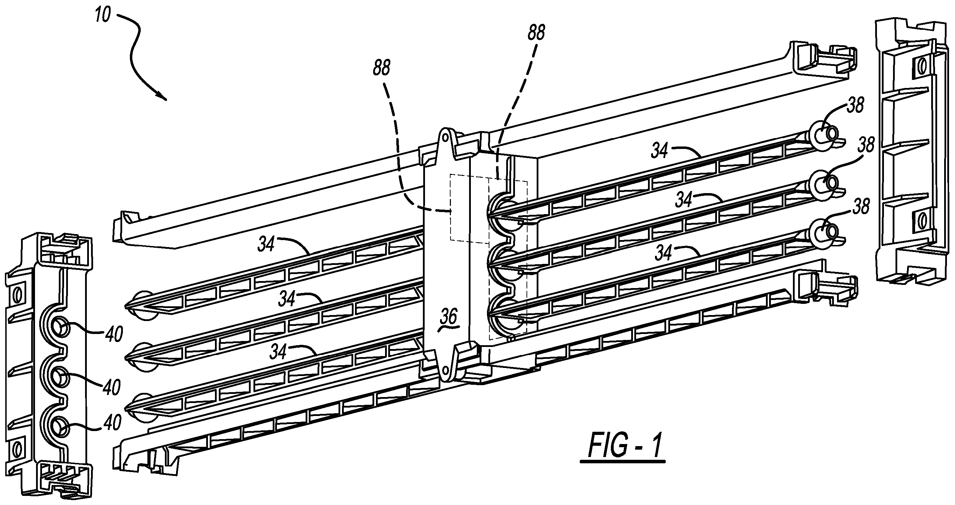

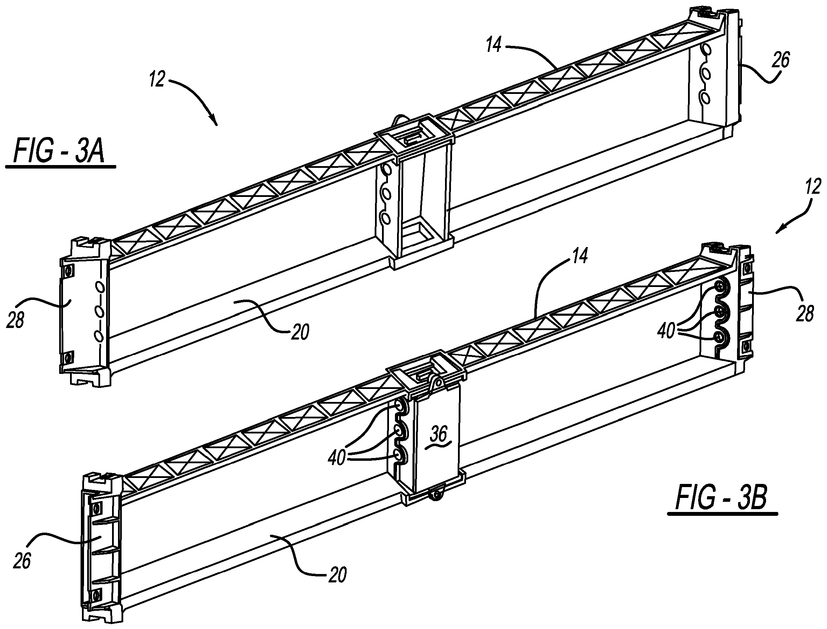

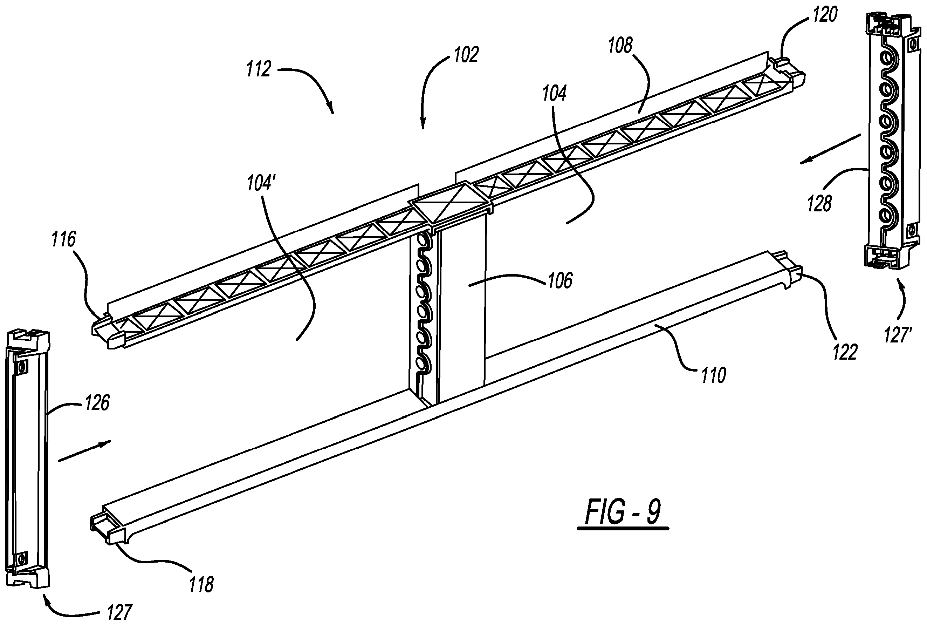

The following description of the preferred embodiment(s) is merely exemplary in nature and is in no way intended to limit the invention, its application, or uses. It is to be noted that the scope of the claims is directed on a single piece design of the primary frame piece which is described below with regard to Figs. 9 to 14. The embodiments of figures 1 to 8 are thus not part of the invention.

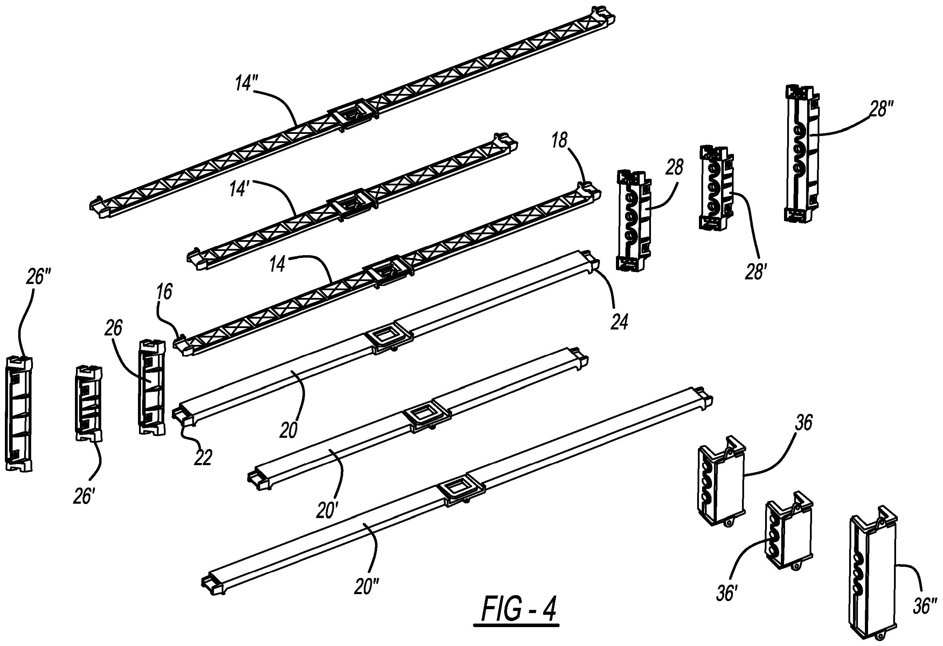

Referring now to the figures generally and with reference to Figs. 1-8D, an active grille shutter arrangement 10 having an modular frame 12, 112, 212, 412, 512, 612 is depicted. The active grille shutter arrangement is defined herein to be a modular frame 12, 112, 212, 412, 512, 612, in accordance with one of the embodiments below, along with a motor assembly and vane as described below. Modular frame 12, 112, 212, 412, 512, 612, which is shown in various views as being exploded, disassembled and assembled in other views. Referring to Fig. 4 an exploded view of the modular frame is shown. The modular frame includes an upper frame portion 14 having a first end 16 and second end 18, as well as a lower frame portion 20 having a first end 22 and second end 24; a first end cap 26 and second end cap 28. The first end cap 26 and second end cap 28 are connected to the upper frame portion 14 and lower frame portion 20 to form the modular frame 12. As shown in the drawings, the shape of the modular frame 12 is generally rectangular; however, it is possible for the structure to have different shapes depending upon the particular application. The upper frame portion 14, lower frame portion 20, first end cap 26 and second end cap 28 are all formed of polymeric material and are created using injection molding. In order to strengthen these components, structural ribs 30 are present on the components in order to make them stronger and reduce the amount of polymeric material needed to create the specific component.

When the upper frame portion 14, lower frame 20, first end cap 26 and second end cap 28 are assembled together to form the modular frame 12, one or more apertures, which is a first aperture 32 and second aperture 32' created to allow air to pass through the modular frame 12 when assembled to a vehicle. The active grille shutter arrangement 10 is created when the assemble modular frame 12 has a plurality of vanes 34 connected between the first end cap 26 and second end cap 28, which can be rotated in order to control the amount of air flowing through the apertures 32. The vanes 34 are connected between a motor housing or motor housing 36 extends between the upper frame portion 14 and the lower frame portion 20. The vanes 34 are connected between the motor housing 36 and one of the first end caps 26 or second end cap 28 and are configured to rotate about barrels 38 formed on each end of the plurality of vanes 34, such that the barrels 38 are rotatably disposed in holes 40 on the motor housing 36, first end cap 26 or second end cap 28. Inside of the motor housing 36 is a motor or actuator 42 that controls the rotatable position of the vanes 34 and thereby controls the amount of air flowing through the apertures 32.

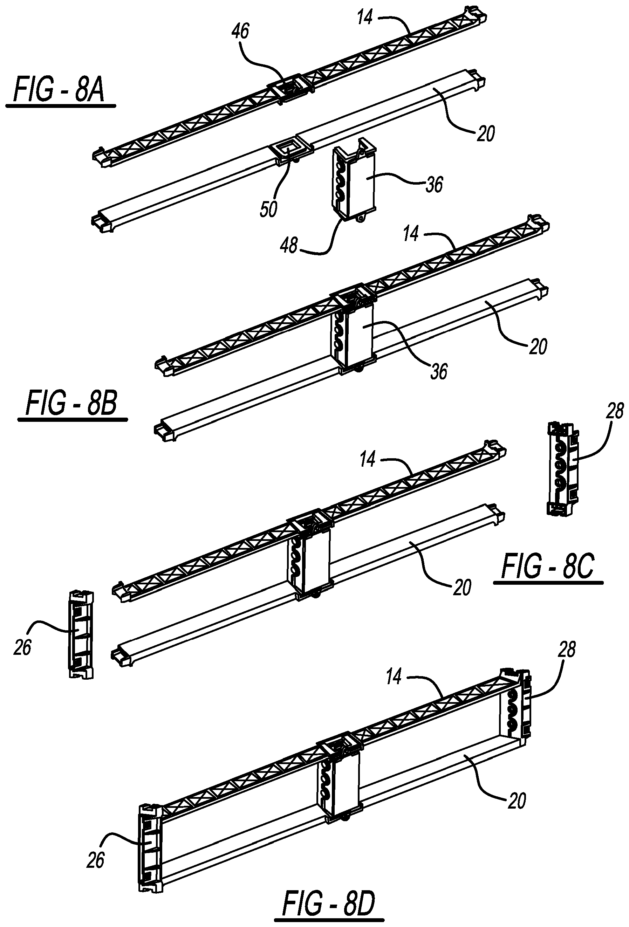

The motor housing 36 is has an upper end 44 that connects to an upper frame center joint 46 of the upper frame portion 14. A lower end 48 of the motor housing 36 connects to a lower frame center joint 50 formed on the lower frame portion 20. The connection between both the upper end 44, upper frame center joint 46, lower end 48 and lower frames center joint 50 can be any type of suitable connection; however, it is provided an interlocking dovetail joint 52, which is best shown in Figs. 8a and 8n. Each interlocking dovetail joint 52 has a protrusion 54 capable of sliding into a groove 56 for aligning and locking the motor housing 36 to its respective upper frame portion 14 or lower frame portion 20. In order to lock the motor housing 36 together with the upper frame portion 14 and lower frame portion 20. Each interlocking dovetail joint 52 also has a tab with a boss and fastener arrangement 58 for locking the interlocking dovetail joint 52 in place. Some type of locking tab or other molded locking mechanism can be used instead of the tab, boss and fastener arrangement 58.

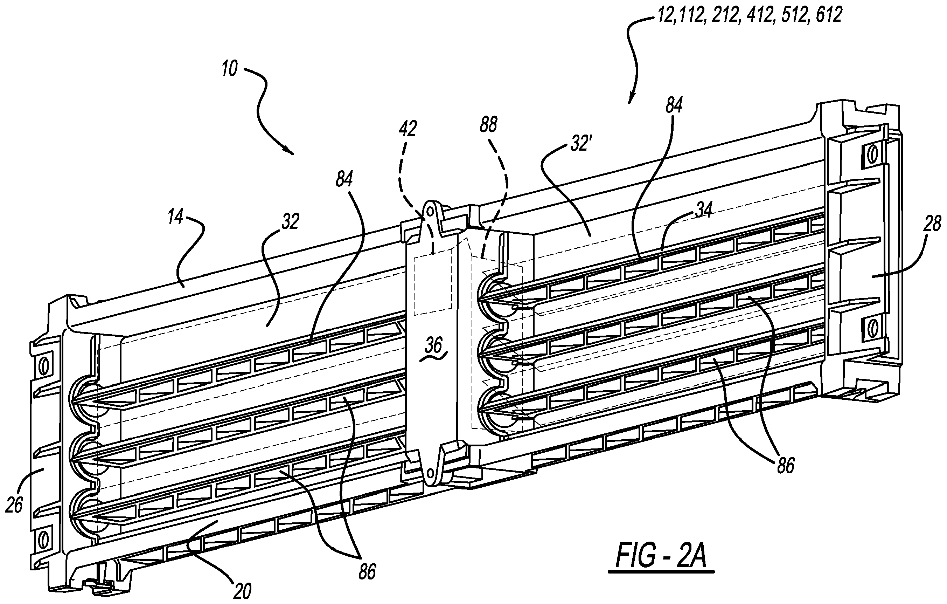

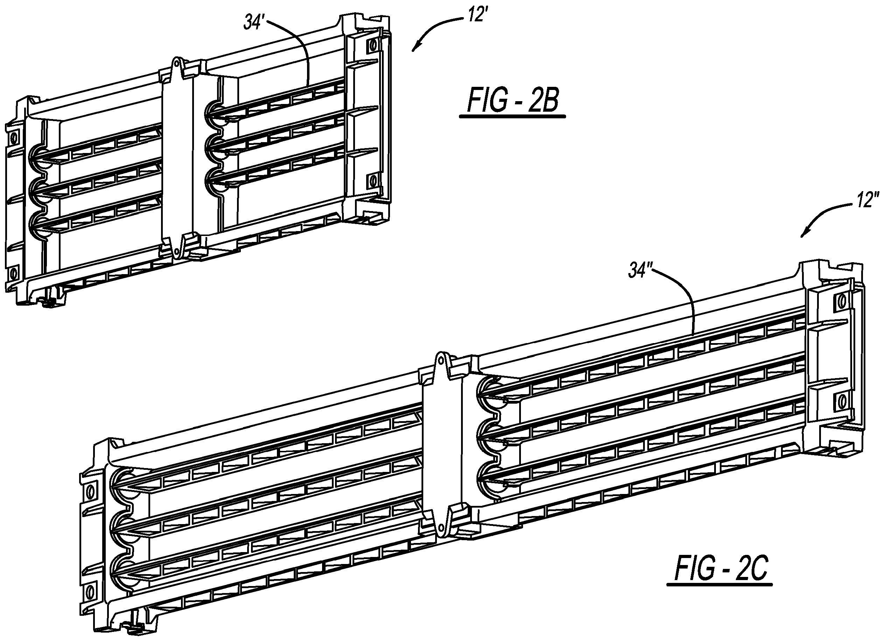

Referring to Figs. 2A, 2B, 2C and 4, another aspect not part of the invention is shown that includes a modular frame kit 13 (shown in Fig. 4), including parts of varying sizes used to create different modular frames. The modular frame 12 is a first modular frame having a different height and width from a second modular frame 12' or third modular frame 12". The first modular frame 12, second modular frame 12' and third modular frame 12" are created by using the different alternate parts shown in Figs. 2A, 2B, 2C and 4, which include the upper frame portion 14, that is a first upper frame portion, a second upper frame portion 14', third upper frame portion 14", the second lower frame portion 20 that is a first lower frame portion, a second lower frame portion 20', third lower frame portion 20", vanes 34, that are a first vanes, second vanes 34' and third vanes 34" (shown in Figs 2A, 2B and 2C) all of which having different widths. The modular frame kit 13 further includes end caps 26, 28 that are a first set of end caps, a second set of end caps 26', 28' and a third set of end caps 26", 28" each having different heights. Also the modular frame kit 13 includes the motor housing 36, which is a first motor housing, second motor housing 36' and third motor housing 36" each having a different height and can be interchanged with the other parts of the modular frame kit to form the first modular frame 12, second modular frame 12', third modular frame 12" as shown in Figs. 2A-2C. During assembly one upper frame portion, one lower frame portion, one motor housing and one set of end caps is selected to create a desired modular frame construction. The selected one of the set of end caps is connected to respective opposing ends of the one selected upper frame portion and one selected lower frame portion forming a generally rectangular or square frame. The one selected motor housing is connected between the one selected upper frame portion and the one selected lower frame portion.

It is also not within the scope of this invention for the parts of the modular frame kit 13 to be used in other combinations to create other modular frame constructions having a height, width and shape that will vary depending on the different components used. It is further not within the scope of this invention for the modular frame kit to have a greater or lesser number of alternate components having different dimensions and is not limited to just three alternative parts.

The modular frame kit 13 provides a great deal of versatility for the various components since the modular frames 12, 12', 12" can have a different size assembled from parts having different lengths. This allows the modular frame 12, 12', 12" to be used with various variants encountered in and incorporating active grille shutter arrangements on vehicles. This also increases the shipping density of the components of the modular frame 12, 12', 12" by allowing similar parts to be packaged together more tightly than would be possible with a modular frame that is one piece.

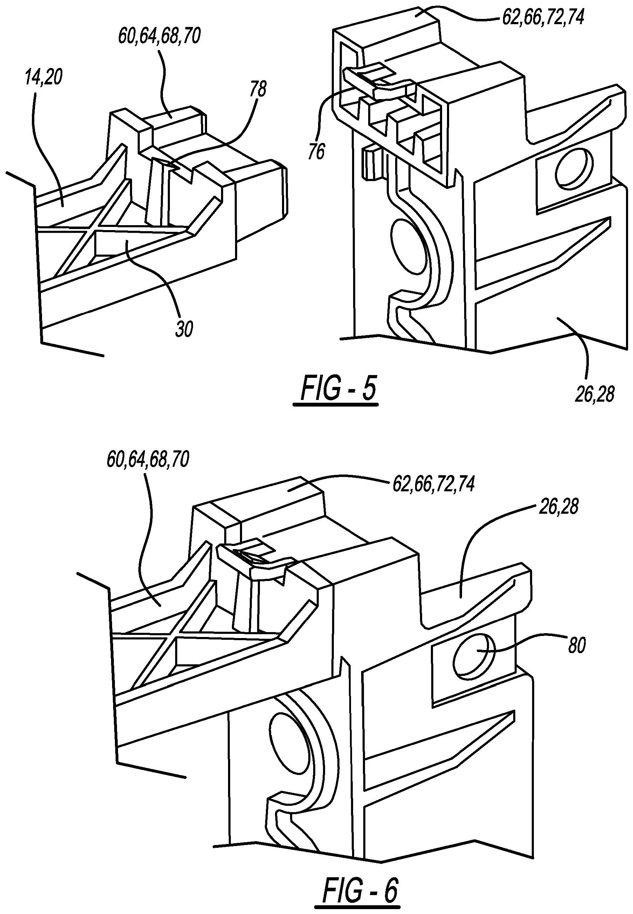

Referring now to Figs. 5 and 6, the connection between the first and second ends 16, 18 of the upper frame portion and the first and second ends of the lower frame portion 22, 24 with each respective first end cap 26 and second end cap 28 are shown. The first end 16 of the upper frame portion 14 has an upper bar end joint 60 formed thereon which is configured to slide into an upper bar end cap joint 62 formed on the first end cap 26. The first end 22 of the lower frame portion 20 has a lower bar end joint 64 formed thereon which slides into a lower bar end cap joint 66 of the first end cap 26. Similarly, the second end 18 of the upper frame portion 14 has an upper bar end joint 68 formed thereon and the second end 24 of the lower frame portion 20 has a lower bar end joint 70 formed thereon. The upper bar end joint 68 of the second end 18 of the upper frame portion 14 is configured to slide into an upper bar end cap joint 72 of the second end cap 28. Also, the lower bar end joint 70 on the second end 24 of the lower frame portion 20 slides into the lower bar end cap joint 74 of the second end cap 28. Once the upper frame portion 14 and lower frame portion 20 are connected to the first end cap 26 and second end cap 28 as described above, the modular frame 12 is complete.

Referring again to Figs. 5 and 6, is an exploded exemplary view of the connection between a respective one of the upper bar end joint 60, 68 or lower bar end joint 64, 70 with the respective upper bar end cap joints 62, 72 or lower bar end cap joints 66, 74. The upper bar end joint 60, 68 and lower bar end joint 64, 70 have show a protrusion that is configured to slide into a housing for receiving the protrusion as shown at the upper bar end cap joint 62, 72 and lower bar end cap joint 66, 74. In order to lock all the pieces together, an end cap snap tab 76 is used to lockingly receive a frame bar snap post 78. While the drawings show the end cap snap tabs 76 as being formed on the lower bar end cap joint 66, 74 or upper bar end cap joint 62, 72 and the frame bar snap post 78 being formed on the upper bar end joint 60, 68 or lower bar end joint 64, 70, the end cap snap tab 76 and frame bar snap post 78 can be reversed and on opposing structures. Additionally, it is possible for other suitable injection molded locking mechanisms to be used including tongue in groove type locks, as well as the use of adhesive or mechanical fasteners depending upon the needs of a particular application.

Referring now to Figs. 1 and 3-8D, once the active grille shutter arrangement 10 has been fully assembled, the arrangement can be connected to a vehicle using body mounts 80 which are holes used for connecting the modular frame 12 using fasteners. However, it is possible for other types of connection mechanisms to be used such as adhesives, welding or other needs depending on a particular application. It is also not within the scope of this invention for the active grille shutter arrangement 10 to be connected to the vehicle chassis, front end module or the fascia of the vehicle.

Referring now to Figs. 2A, an assembled active grille shutter arrangement 10 is shown having the having the specific valves 34 are shown. The plurality of vanes 34 include a driving vane 84 connected to the motor and the other of the plurality of vanes are driven vanes 86 that are driven by a link bar 88 connected to the driving vane 84. Fig. 2A shows two driving vanes 84, located on opposite sides of the motor housing 36 which allows for the two apertures of the modular frame to be opened and closed independently of each other depending on the type of motor used.

Referring now to Figs. 9-14 several embodiments of the modular frame of the active grille shutter system 10 of the invention are shown and described. In each of these various embodiments the modular frame has a different shape, and in other embodiments has differently shaped primary frame pieces and secondary frame pieces, which are assembled together to form the modular frame of the active grille shutter arrangement. In particular FIG 9 shows an embodiment of a modular frame 112 having a primary frame piece 102 that is a one piece having the shape of a capital letter "I" or capital letter "H". The primary frame piece 102 defines a width and height of an aperture 104 of the modular frame 112. The primary frame piece 102 in the present embodiment of the invention is a single piece and further includes a motor housing 106, upper frame portion 108 and lower frame portion 110. The motor housing 106 extends between the upper frame portion 108 and the lower frame portion 110 and divides the aperture 104 in half. The modular frame 112 further includes a plurality of secondary frame pieces 127, 127 that include a first end cap 126 and second end cap 128. The first end cap 126 and second end cap 128 are connectable to both the upper frame portion 108 and lower frame portion 110. The first end cap 126 connects to a first end 116 of the upper frame portion 108 and a first end 118 of the lower frame portion 110. The second end cap 128 connects to a second end 120 of the upper frame portion 108 and a second end 122 of the lower frame portion 110. The manner in which the connection between the first end cap 112 and second end cap 114 with the primary frame piece is shown and described above with respect to figs 5 and 6. The present embodiment of the invention allows for the modular frame 112 to be formed from a fewer number of pieces than the embodiments shown and described in FIG. 4.

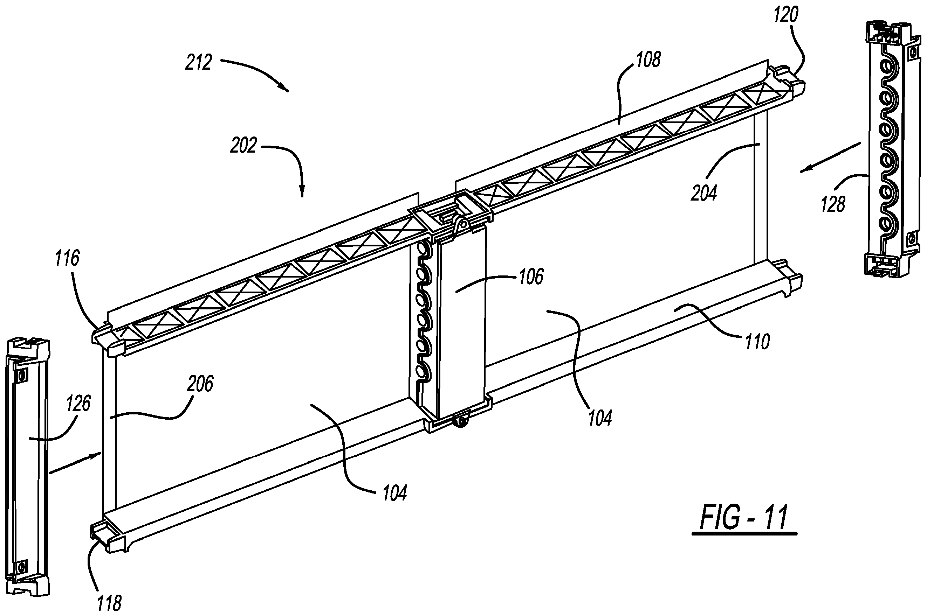

Referring now to FIG. 11 an alternate embodiment of a modular frame 212 is shown. The elements of a modular frame 112 are similar or identical to those shown and described with respect to FIG. 9 above, therefore similar elements have been labeled using the same reference numerals. In the present embodiment of the invention a primary frame piece 202 includes bridge elements 204, 206 that are formed as part of the primary frame piece 202 or snapped onto the primary frame piece 202 in order to stabilize and prevent warping of the primary frame piece 202. The stabilization and warping can occur during the formation of the primary frame piece 202, which is typically formed from molten polymer, or the warpage can result during transport, prior to assembly of the modular frame 200. The first end cap 112 and second end cap 114 are connected to the primary frame piece 202 in the same manner as described above. The bridge elements 204, 206 are formed onto the primary frame piece 202 during molding or they may be connected to the primary frame piece 202 after formation. The bridge elements can either stay in place upon connection of the secondary frame pieces, such as the first end cap 126 or second end cap 128 or they can be removed after connection of the first end cap 126 or second end cap 128.

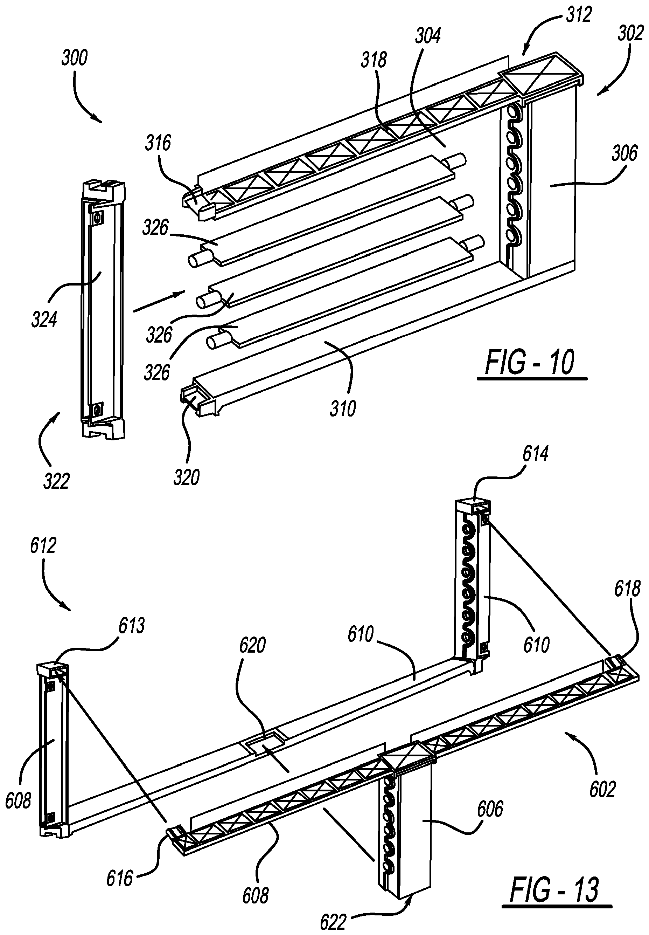

Referring now to Fig. 10 another alternate embodiment of a modular frame 312 is shown for an active grille shutter arrangement 300. In this embodiment of the invention there is a primary frame piece 302 with three sides including an upper frame portion 318, lower frame portion 310 and a motor housing 306 that houses the motor for driving a plurality of vanes 326 in a manner similar to the embodiments described above. The motor housing 306 extends between the upper frame portion 318 and the lower frame portion 310. The upper frame portion has an end 316 and the lower frame portion has an end 320 that a secondary frame piece 322, that is an end cap 324 similar to the first end cap and second end cap in the previous embodiments connects to form an aperture 304. In this embodiment of the invention the motor housing does not extend across the aperture 304 of the modular frame 312. Vanes 326 extend across the aperture 304 and rotatably connect to the motor housing 306 and the secondary frame 322. The modular frame 312 in the present embodiment of the invention is used in active grille shutter arrangements where it is desirable to not divide the aperture 304 in half using a motor housing. Also the vanes 326 are controlled by a motor and link bar which are shown and described in Fig. 2 above.

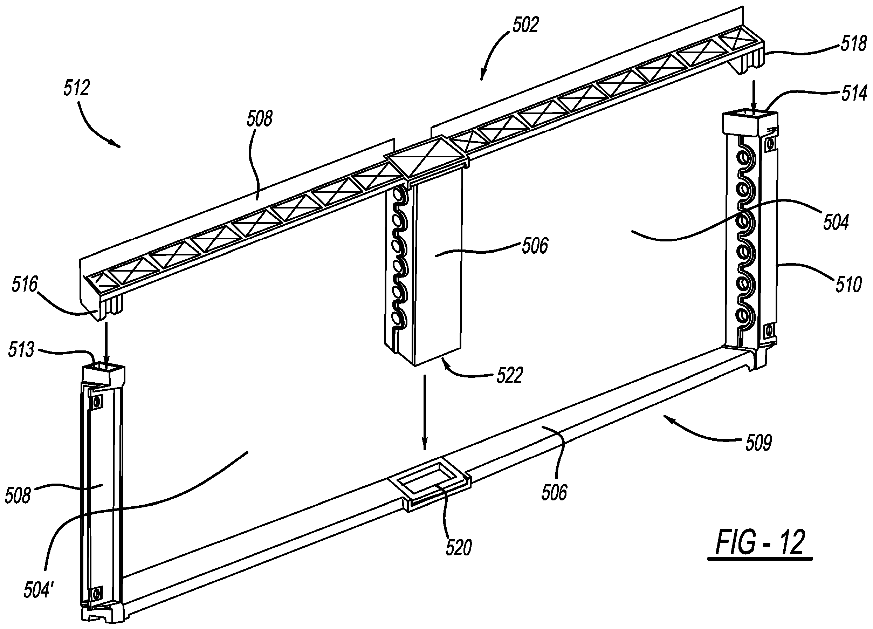

Referring now to Fig. 12 an alternate embodiment of a modular frame 512 having a primary frame piece 502 that is one piece having the shape of a capital letter "T". The primary frame piece 502 defines a width and height of an aperture 504, 504' of the modular frame 512. The primary frame piece 502 in the present embodiment of the invention is a single piece and further includes a motor housing 506 and upper frame portion 508. There is a secondary frame piece 509 having the shape of a capital letter "U" and is a single piece having a lower frame portion 506 and upwardly extending first end portion 508 and second end portion 510. The first end portion 508 and second end portion 510 each have a receiving end joint 513, 514 that face upward toward the primary frame piece 502. The upper frame portion 508 has downwardly facing post 516, 518 that are received by a respective receiving end joint 513, 514. The motor housing 506 has a lower motor housing connection member 522 and connection point 520 formed on the lower frame portion 506 that connects the motor housing 506 to the secondary frame piece 509. The motor housing 506 extends between the upper frame portion 508 and lower frame portion 506 and defines the aperture 504,504'. The connection between each downwardly facing post 516, 518 and the receiving end joint 513, 514 and the lower motor housing connection member 522 and connection point 520 are not limited to any particular configuration but can be the types of connections shown and described in Figs. 5, 6 and 7. The modular frame 512 in the present invention can be assembled by vertically snapping the primary frame piece 502 and the secondary frame piece 509 together.

Fig. 13 depicts an additional alternate embodiment of the modular frame 512 shown in Fig. 12. In this embodiment a modular frame 612 a primary frame piece 602 that is a one piece having the shape of a capital letter "T". The primary frame piece 602 defines a width and height of an aperture 604 of the modular frame 612. The primary frame piece 602 in the present embodiment of the invention is a single piece and further includes a motor housing 606 and upper frame portion 608. There is a secondary frame piece 609 having the shape of a capital letter "U" and is a single piece having a lower frame portion 606 and upwardly extending first end portion 608 and second end portion 610. The first end portion 608 and second end portion 610 each have a receiving end joint 613, 614 that face perpendicular to the plane of the aperture 604 formed in the modular frame 612. The upper frame portion 608 has a post 616, 618 that also face in a direction perpendicular to the aperture 604 and are received by a respective receiving end joint 613, 614. The motor housing 606 has a lower motor housing connection member 622 and connection point 620 formed on the lower frame portion 606 that connects the motor housing 606 to the secondary frame piece 609. The motor housing 606 extends between the upper frame portion 608 and lower frame portion 606 and divides the aperture 604 in half. The connection between each post 616, 618 and the receiving end joint 513, 514 and the lower motor housing connection member 622 and connection point 620 are not limited to any particular configuration but can be the types of connections shown and described in Figs. 5, 6 and 7. The modular frame 612 in the present invention is assembled by horizontally snapping the primary frame piece 602 and the secondary frame piece 609 together by moving the piece perpendicular to the plane of the aperture 504 formed by the modular frame 512.

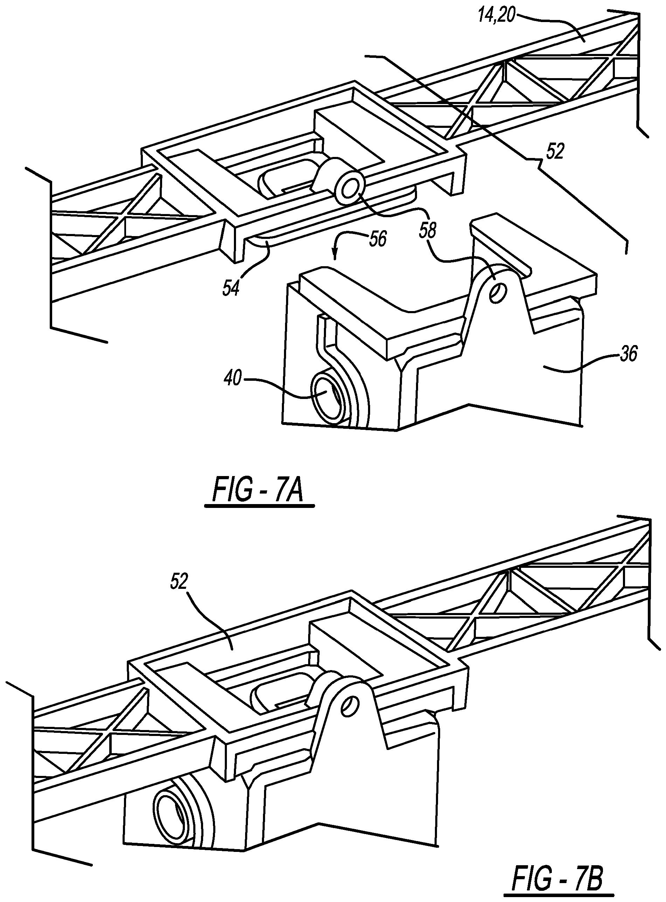

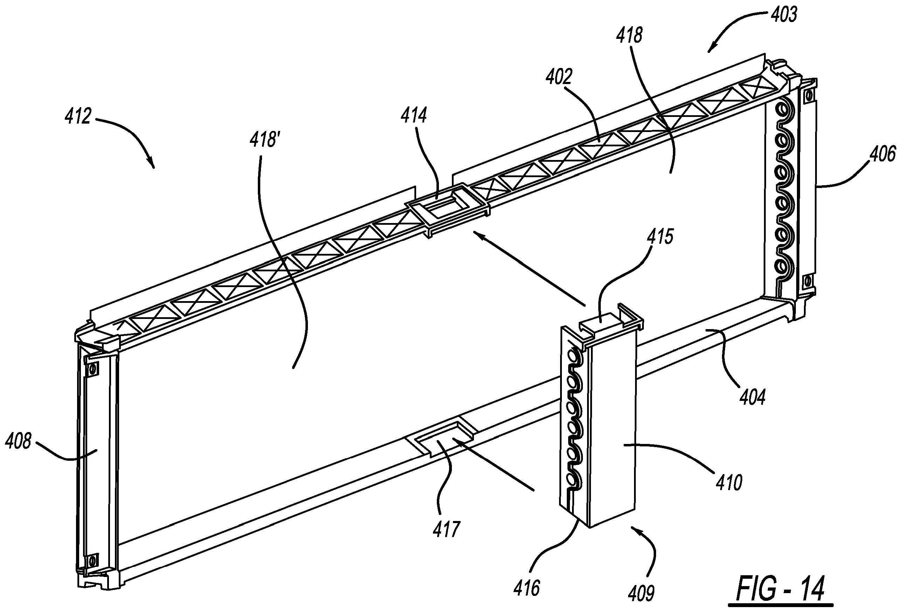

Referring to Fig. 14 an alternate embodiment of a modular frame 412 is shown. The modular frame 412 has a primary frame piece 403 that is a single piece having a generally rectangular shape that defines an aperture 418,418'. While a rectangular shape is shown, it is within the scope of this invention for the modular frame 412 to have a different shape, such as but not limited to a square, circle, trapezoid or virtually any other type of shape. The primary frame piece 403 has an upper frame portion 402, lower frame portion 404. There is a first end portion 408 extending between the upper frame portion 402 and lower frame portion 404 at one end and a second end portion 406 extending between the upper frame portion 402 and lower frame portion 404 at a second end. A secondary frame piece 409, which is a motor housing 410 used to house an actuator for the active grille shutter system connects to the upper frame portion 402 and at the lower frame portion 404. The motor housing 410 has a lower motor housing connection member 416 that connects to a connection point 417 formed on the lower frame portion 404 and an upper motor housing connection member 415 that connects to a connection point 414 formed on the upper frame portion 402. The connections for the motor housing 410 can take any form but include all of the types of connections shown and described in Fig. 7.

## Claims

1. An active grille shutter arrangement having a modular frame (112, 212, 312, 412, 512, 612) comprising:
a primary frame piece (102, 202, 302, 403, 502, 602):
at least one secondary frame piece (127, 322, 409, 509, 609) connectable to the primary frame piece (102, 202, 302, 403, 502, 602), wherein the primary frame piece (102, 202, 302, 403, 502, 602) and the at least one secondary frame piece (127, 322, 409, 509, 609) form the modular frame (112, 212, 312, 412, 512, 612) having at least one aperture (104, 304, 418, 504, 604) capable of allowing air to pass through the modular frame (112, 212, 312, 412, 512, 612); and
a plurality of vanes (326) rotatably positioned between the at least one primary frame piece (102, 202, 302, 403, 502, 602) and the at least one secondary frame piece (127, 322, 409, 509, 609), **characterized in that** the primary frame piece (102, 202, 302, 403, 502, 602) is a single piece defining a width and height of an aperture (104, 304, 418, 504, 604) of the modular frame (112, 212, 312, 412, 512, 612).

2. The active grille shutter arrangement of claim 1 further comprising:
a motor housing (106, 306, 506, 410, 606) forming part of the primary frame piece (102, 202, 302, 403, 502, 602) or the at least one secondary frame piece (127, 322, 409, 509, 609); and
a motor connected to the motor housing (106, 306, 410, 506, 606), wherein the motor is connected to the plurality of vanes (326) to cause the plurality of vanes (326) to rotate between an open position, closed position and one or more intermediate positions relative to the aperture (104, 304, 418, 504, 604) of the modular frame (112, 212, 312, 412, 512, 612).

3. The active grille shutter arrangement of claim 1 or 2 further comprising:
- one of the plurality of vanes (326) is a driving vane connected to the motor and all of the other plurality of vanes (326) are connected to the driving vane by a linkage mechanism for rotating all the plurality of vanes (326) in response to the motor rotating the driving vane; and/or
- at least one connection joint between the primary frame piece (102, 202, 302, 403, 502, 602) and the at least one secondary frame piece (127, 322, 409, 509, 609), wherein the at least one connection joint each include an interlocking dovetail joint secured with a tab and boss; and/or
- at least one connection joint between the primary frame piece (102, 202, 302, 403, 502, 602) and the secondary frame piece (127, 322, 409, 509, 609); and an end cap snap tab and snap post connection located at each of the least one connection joint between the primary frame piece (102, 202, 302, 403, 502, 602) and the secondary frame piece (127, 322, 409, 509, 609); and/or
- wherein each one of the plurality of vanes (326) has two ends with barrels formed on each of the two and ends; and holes formed on the primary frame piece (102, 202, 302, 403, 502, 602) and secondary frame piece (127, 322, 409, 509, 609) to rotatably receive one of said barrels of one of said plurality of vanes (326); and/or
- one or more bridges (204, 206) on the primary frame piece (102, 202, 302, 403, 502, 602) for stabilizing the primary frame piece (102, 202, 302, 403, 502, 602) frame portion prior to connection of the at least one secondary frame piece (127, 322, 409, 509, 609).

4. An active grille shutter arrangement having a modular frame (112, 212, 312, 412, 512, 612) comprising:
a primary frame piece (102, 202, 302, 403, 502, 602), wherein the primary frame piece (102, 202, 302, 403, 502, 602) has an upper frame portion (108, 318, 402, 508, 608) having a first end and a second end, a lower frame portion (110, 310, 404, 506, 606) having a first end and a second end and a motor housing (106, 306, 410, 506, 606) extending between the upper frame portion (108, 318, 402, 508, 608) and the lower frame portion (110, 310, 404, 506, 606);
a plurality of secondary frame pieces (127, 322, 409, 509, 609) including a first end cap, connectable to the respective first end of the upper frame portion (108, 318, 402, 508, 608) and first end of the lower frame portion (110, 310, 404, 506, 606) by an upper bar end joint formed on the first end of the upper frame portion (108, 318, 402, 508, 608) and a lower bar end joint formed on the first end of the lower frame portion (110, 310, 404, 506, 606), and a second end cap of the plurality of secondary frame pieces (127, 322, 409, 509, 609) connectable to both the second end of the upper frame portion and the second end of the lower frame portion (110, 310, 404, 506, 606) by an upper bar end joint formed on the second end of the upper frame portion (108, 318, 402, 508, 608) and a lower bar end joint formed on the second end of the lower frame portion (110, 310, 404, 506, 606);
the modular frame (112, 212, 312, 412, 512, 612) of the active griller shutter arrangement formed by the connection of the primary frame piece (102, 202, 302, 403, 502, 602) and the secondary frame piece (127, 322, 409, 509, 609), wherein the modular frame (112, 212, 312, 412, 512, 612) defines the one or more apertures (104, 304, 418, 504, 604);
a plurality of vanes (326) rotatably positioned between the first end cap and the second end cap for controlling the amount of air flowing through the one or more apertures (104, 304, 418, 504, 604) formed by the modular frame (112, 212, 312, 412, 512, 612); and
wherein the motor housing (106, 306, 410, 506, 606) of the primary frame piece (102, 202, 302, 403, 502, 602) extends between the upper frame portion (108, 318, 402, 508, 608) and the lower frame portion (110, 310, 404, 506, 606), **characterized in that** the primary frame piece (102, 202, 302, 403, 502, 602) is a single piece defining a width and height of one or more apertures (104, 304, 418, 504, 604) of the modular frame (112, 212, 312, 412, 512, 612).

5. The active grille shutter arrangement of claim 4 further comprising:
a motor connected to the motor housing (106, 306, 410, 506, 606), wherein the motor is connected to the plurality of vanes (326) to cause the plurality of vanes (326) to rotate between an open position, closed position and one or more intermediate positions relative to the aperture (104, 304, 418, 504, 604) of the modular frame (112, 212, 312, 412, 512, 612).

6. The active grille shutter arrangement of claim 4 or 5, further comprising:
one of the plurality of vanes (326) is a driving vane connected to the motor and all of the other plurality of vanes (326) are connected to the driving vane by a linkage mechanism for rotating all the plurality of vanes (326) in response to the motor rotating the driving vane.

7. The active grille shutter arrangement of any one of claims 4 to 6, wherein
- the upper bar end joint formed on the first end of the upper frame portion (108, 318, 402, 508, 608), the lower bar end joint formed on the first end of the lower frame portion (110, 310, 404, 506, 606), the upper bar end joint formed on the second end of the upper frame portion (108, 318, 402, 508, 608) and the lower bar end joint formed on the second end of the lower frame portion (110, 310, 404, 506, 606) each include an interlocking dovetail joint secured with a tab and boss; or
- the upper bar end joint formed on the first end of the upper frame portion (108, 318, 402, 508, 608), the lower bar end joint formed on the first end of the lower frame portion (110, 310, 404, 506, 606), the upper bar end joint formed on the second end of the upper frame portion (108, 318, 402, 508, 608) and the lower bar end joint formed on the second end of the lower frame portion (110, 310, 404, 506, 606) each include an end cap snap tab and snap post connection located at each of the least one connection point between the primary frame and the secondary frame piece (127, 322, 409, 509, 609).

8. The active grille shutter arrangement of any one of claims 4 to 7, further comprising:
wherein each one of the plurality of vanes (326) has two ends with barrels formed on each of the two and ends; and
holes formed on the primary frame piece (102, 202, 302, 403, 502, 602) and secondary frame piece (127, 322, 409, 509, 609) to rotatably receive one of said barrels of one of said plurality of vanes (326).

9. The active grille shutter arrangement of any one of claims 4 to 8, wherein the motor housing (106, 306, 410, 506, 606) has an upper end connected to an upper frame center joint formed on the upper frame portion (108, 318, 402, 508, 608) between the first end and the second end of the upper frame portion (108, 318, 402, 508, 608) and a lower end of the motor housing (106, 306, 410, 506, 606) connected to the lower frame portion (110, 310, 404, 506, 606) at a lower frame center joint formed on the lower frame portion (110, 310, 404, 506, 606) between the first end and the second end of the lower frame portion (110, 310, 404, 506, 606).

10. The active grille shutter arrangement of claim 9 wherein the connection between the motor housing (106, 306, 410, 506, 606) at the lower frame center joint and the upper frame center joint are each an interlocking dovetail joint secured with a tab and boss connected together with a fastener when the tab and boss are aligned.

11. The active grille shutter arrangement of any one of claims 4 to 10, further comprising a lower end of the motor housing (106, 306, 410, 506, 606) connected to the lower frame portion (110, 310, 404, 506, 606) at a lower frame center joint formed on the lower frame portion (110, 310, 404, 506, 606) between the first end and the second end of the lower frame portion (110, 310, 404, 506, 606).

12. The active grille shutter arrangement of claim 11, wherein the connection between the motor housing (106, 306, 410, 506, 606) at the lower frame center joint is an interlocking dovetail joint secured with a tab and boss connected together with a fastener when the tab and boss are aligned.

13. The active grille shutter arrangement of any one of claims 4 to 12, further comprising one or more bridges (204, 206) extending between the upper frame portion (108, 318, 402, 508, 608) and the lower frame portion (110, 310, 404, 506, 606) for stabilizing the upper frame portion (108, 318, 402, 508, 608) and lower frame portion (110, 310, 404, 506, 606) prior to connection of the plurality of secondary frame pieces (127, 322, 409, 509, 609).

14. The active grille shutter arrangement of any one of claims 2, 3 or 4 to 13, wherein the motor housing (106, 306, 410, 506, 606) extends across the aperture (104, 304, 418, 504, 604) of the modular frame (112, 212, 312, 412, 512, 612), dividing the aperture (104, 304, 418, 504, 604) into two sections, or wherein the motor housing (106, 306, 410, 506, 606) does not extend across the aperture (104, 304, 418, 504, 604) of the modular frame (112, 212, 312, 412, 512, 612).

15. A modular frame kit including interchangeable parts of varying sizes used to create an active grille shutter arrangement according to any one of claims 1 to 14, comprising:
one of a first modular frame, second modular frame and third modular frame each having a different height and width formed from the modular frame kit comprising:
one selected upper frame portion (108, 318, 402, 508, 608) selected from a group comprising a first upper frame portion (108, 318, 402, 508, 608), a second upper frame and a third upper frame portion (108, 318, 402, 508, 608) each having different widths;
one selected lower frame portion (110, 310, 404, 506, 606) selected from a group comprising a first lower frame portion (110, 310, 404, 506, 606), a second lower frame and a third lower frame portion (110, 310, 404, 506, 606) each having different widths;
one selected motor housing (106, 306, 410, 506, 606) selected from a group comprising a first motor, second motor housing (106, 306, 410, 506, 606) and third motor housing (106, 306, 410, 506, 606) each having different heights;
one selected set of end caps selected from a group comprising a first set of two end caps, second set of two end caps and third set of two end caps each having different heights; and
wherein each one of the one selected set of end caps is connected to respective opposing ends of the one selected upper frame portion (108, 318, 402, 508, 608) and one selected lower frame portion (110, 310, 404, 506, 606) forming a rectangular frame, and the one selected motor housing (106, 306, 410, 506, 606) connected between the one selected upper frame portion (108, 318, 402, 508, 608) and the one selected lower frame portion (110, 310, 404, 506, 606).

## Patentansprüche

1. Aktive Grillblendenanordnung mit einem modularen Rahmen (112, 212, 312, 412, 512, 612) mit:
einem primären Rahmenteil (102, 202, 302, 403, 502, 602),
mindestens einem sekundären Rahmenteil (127, 322, 409, 509, 609), der mit dem primären Rahmenteil (102, 202, 302, 403, 502, 602) verbindbar ist, wobei der primäre Rahmenteil (102, 202, 302, 403, 502, 602) und der mindestens eine sekundäre Rahmenteil (127, 322, 409, 509, 609) den modularen Rahmen (112, 212, 312, 412, 512, 612) bilden, der mindestens eine Öffnung (104, 304, 418, 504, 604) aufweist, die in der Lage ist, Luft durch den modularen Rahmen (112, 212, 312, 412, 512, 612) strömen zu lassen, und
einer Anzahl von Flügeln (326), die drehbar zwischen dem mindestens einen primären Rahmenteil (102, 202, 302, 403, 502, 602) und dem mindestens einen sekundären Rahmenteil (127, 322, 409, 509, 609) angeordnet sind, **dadurch gekennzeichnet, dass** der primäre Rahmenteil (102, 202, 302, 403, 502, 602) ein einziges Teil ist, das eine Breite und Höhe einer Öffnung (104, 304, 418, 504, 604) des modularen Rahmens (112, 212, 312, 412, 512, 612) definiert.

2. Aktive Grillblendenanordnung nach Anspruch 1 mit ferner:
einem Motorgehäuse (106, 306, 506, 410, 606), das Teil des primären Rahmenteils (102, 202, 302, 403, 502, 602) oder des mindestens einen sekundären Rahmenteils (127, 322, 409, 509, 609) ist, und
einem Motor, der mit dem Motorgehäuse (106, 306, 410, 506, 606) verbunden ist, wobei der Motor mit der Anzahl von Flügeln (326) verbunden ist, um zu bewirken, dass die Anzahl von Flügeln (326) zwischen einer offenen Position, einer geschlossenen Position und einer oder mehreren Zwischenpositionen relativ zu der Öffnung (104, 304, 418, 504, 604) des modularen Rahmens (112, 212, 312, 412, 512, 612) rotieren.

3. Aktive Grillblendenanordnung nach Anspruch 1 oder 2 mit ferner:
- einer der Anzahl von Flügeln (326) ein Antriebsflügel ist, der mit dem Motor verbunden ist, und alle anderen der Anzahl von Flügeln (326) mit dem Antriebsflügel durch einen Verbindungsmechanismus verbunden sind, um alle der Anzahl von Flügeln (326) in Reaktion auf den Motor zu drehen, der den Antriebsflügel dreht, und/oder
- mindestens einer Anschlussverbindung zwischen dem primären Rahmenteil (102, 202, 302, 403, 502, 602) und dem mindestens einen sekundären Rahmenteil (127, 322, 409, 509, 609), wobei die mindestens eine Anschlussverbindung jeweils eine ineinandergreifende Schwalbenschwanzverbindung umfasst, die mit einer Lasche und einem Vorsprung gesichert ist, und/oder
- mindestens einer Anschlussverbindung zwischen dem primären Rahmenteil (102, 202, 302, 403, 502, 602) und dem sekundären Rahmenteil (127, 322, 409, 509, 609), und eine Endkappen-Schnapplaschen- und Schnappzapfenverbindung, die an jeder der mindestens einen Anschlussverbindung zwischen dem primären Rahmenteil (102, 202, 302, 403, 502, 602) und dem sekundären Rahmenteil (127, 322, 409, 509, 609) angeordnet ist, und/oder
- wobei jede der Mehrzahl von Flügeln (326) zwei Enden mit an jedem der beiden Enden ausgebildeten Zylindern aufweist, und Löcher, die an dem primären Rahmenteil (102, 202, 302, 403, 502, 602) und dem sekundären Rahmenteil (127, 322, 409, 509, 609) ausgebildet sind, um einen der Zylinder einer der Mehrzahl von Flügeln (326) drehbar aufzunehmen, und/oder
- eine oder mehrere Brücken (204, 206) auf dem primären Rahmenteil (102, 202, 302, 403, 502, 602) zur Stabilisierung des Rahmenabschnitts des primären Rahmenteils (102, 202, 302, 403, 502, 602) vor der Verbindung mit dem mindestens einen sekundären Rahmenteil (127, 322, 409, 509, 609).

4. Aktive Grillblendenanordnung mit einem modularen Rahmen (112, 212, 312, 412, 512, 612) mit:
einem primären Rahmenteil (102, 202, 302, 403, 502, 602), wobei der primäre Rahmenteil (102, 202, 302, 403, 502, 602) einen oberen Rahmenabschnitt (108, 318, 402, 508, 608) mit einem ersten Ende und einem zweiten Ende, einen unteren Rahmenabschnitt (110, 310, 404, 506, 606) mit einem ersten Ende und einem zweiten Ende und ein Motorgehäuse (106, 306, 410, 506, 606), das sich zwischen dem oberen Rahmenabschnitt (108, 318, 402, 508, 608) und dem unteren Rahmenabschnitt (110, 310, 404, 506, 606) erstreckt, aufweist,
einer Anzahl von sekundären Rahmenteilen (127, 322, 409, 509, 609) mit einer ersten Endkappe, die mit dem jeweiligen ersten Ende des oberen Rahmenabschnitts (108, 318, 402, 508, 608) und dem ersten Ende des unteren Rahmenabschnitts (110, 310, 404, 506, 606) durch eine obere Stangenendverbindung, die an dem ersten Ende des oberen Rahmenabschnitts (108, 318, 402, 508, 608) ausgebildet ist, und eine untere Stangenendverbindung, die an dem ersten Ende des unteren Rahmenabschnitts (110, 310, 404, 506, 606) ausgebildet ist, verbindbar ist, ausgebildet ist, und eine zweite Endkappe der Anzahl von sekundären Rahmenteilen (127, 322, 409, 509, 609), die sowohl mit dem zweiten Ende des oberen Rahmenabschnitts als auch mit dem zweiten Ende des unteren Rahmenabschnitts (110, 310, 404, 506, 606) durch eine obere Stangenendverbindung, die an dem zweiten Ende des oberen Rahmenabschnitts (108, 318, 402, 508, 608) ausgebildet ist, und eine untere Stangenendverbindung, die an dem zweiten Ende des unteren Rahmenabschnitts (110, 310, 404, 506, 606) ausgebildet ist, verbindbar ist,
wobei der modulare Rahmen (112, 212, 312, 412, 512, 612) der aktiven Grillblendenanordnung, der durch die Verbindung des primären Rahmenteils (102, 202, 302, 403, 502, 602) und des sekundären Rahmenteils (127, 322, 409, 509, 609) gebildet wird, wobei der modulare Rahmen (112, 212, 312, 412, 512, 612) die eine oder mehrere Öffnungen (104, 304, 418, 504, 604) definiert,
einer Anzahl von Flügeln (326), die drehbar zwischen der ersten Endkappe und der zweiten Endkappe angeordnet sind, um die Luftmenge zu steuern, die durch die eine oder mehrere Öffnungen (104, 304, 418, 504, 604) strömt, die von dem modularen Rahmen (112, 212, 312, 412, 512, 612) gebildet werden, und
wobei sich das Motorgehäuse (106, 306, 410, 506, 606) des primären Rahmenteils (102, 202, 302, 403, 502, 602) zwischen dem oberen Rahmenabschnitt (108, 318, 402, 508, 608) und dem unteren Rahmenabschnitt (110, 310, 404, 506, 606) erstreckt, **dadurch gekennzeichnet, dass** der primäre Rahmenteil (102, 202, 302, 403, 502, 602) ein einziges Teil ist, das eine Breite und Höhe von einer oder mehreren Öffnungen (104, 304, 418, 504, 604) des modularen Rahmens (112, 212, 312, 412, 512, 612) definiert.

5. Aktive Grillblendenanordnung nach Anspruch 4 mit ferner:
einem Motor, der mit dem Motorgehäuse (106, 306, 410, 506, 606) verbunden ist, wobei der Motor mit der Anzahl von Flügeln (326) verbunden ist, um zu bewirken, dass die Anzahl von Flügeln (326) zwischen einer offenen Position, einer geschlossenen Position und einer oder mehreren Zwischenpositionen relativ zu der Öffnung (104, 304, 418, 504, 604) des modularen Rahmens (112, 212, 312, 412, 512, 612) rotiert.

6. Aktive Grillblendenanordnung nach Anspruch 4 oder 5 mit ferner:
einer der Anzahl von Flügeln (326) eine Antriebsflügel ist, der mit dem Motor verbunden ist, und alle anderen der Anzahl von Flügeln (326) mit dem Antriebsflügel durch einen Verbindungsmechanismus zum Drehen aller der Anzahl von Flügeln (326) als Reaktion auf den Motor, der die Antriebsflügel dreht, verbunden sind.

7. Aktive Grillblendenanordnung nach einem der Ansprüche 4 bis 6, wobei
- die obere Stangenendverbindung, die an dem ersten Ende des oberen Rahmenabschnitts (108, 318, 402, 508, 608) ausgebildet ist, die untere Stangenendverbindung, die an dem ersten Ende des unteren Rahmenabschnitts (110, 310, 404, 506, 606) ausgebildet ist, die obere Stangenendverbindung, die am zweiten Ende des oberen Rahmenabschnitts (108, 318, 402, 508, 608) ausgebildet ist, und die untere Stangenendverbindung, die am zweiten Ende des unteren Rahmenabschnitts (110, 310, 404, 506, 606) ausgebildet ist, jeweils eine ineinandergreifende Schwalbenschwanzverbindung aufweisen, die mit einer Lasche und einem Vorsprung gesichert ist, oder
- die obere Stangenendverbindung, die an dem ersten Ende des oberen Rahmenabschnitts (108, 318, 402, 508, 608) ausgebildet ist, die untere Stangenendverbindung, die an dem ersten Ende des unteren Rahmenabschnitts (110, 310, 404, 506, 606) ausgebildet ist, die obere Stangenendverbindung, die an dem zweiten Ende des oberen Rahmenabschnitts (108, 318, 402, 508, 608) ausgebildet ist, und die untere Stangenendverbindung, die am zweiten Ende des unteren Rahmenabschnitts (110, 310, 404, 506, 606) ausgebildet ist, jeweils eine Endkappen-Schnapplasche und eine Schnappzapfenverbindung aufweisen, die an jedem der mindestens einen Verbindungspunkte zwischen dem primären Rahmen und dem sekundären Rahmenteil (127, 322, 409, 509, 609) angeordnet sind.

8. Aktive Grillblendenanordnung nach einem der Ansprüche 4 bis 7 mit ferner:
wobei jeder der mehreren Flügel (326) zwei Enden mit an jedem der beiden Enden ausgebildeten Zylindern aufweist, und
Löcher, die auf dem primären Rahmenteil (102, 202, 302, 403, 502, 602) und dem sekundären Rahmenteil (127, 322, 409, 509, 609) ausgebildet sind, um einen der Zylinder einer der Anzahl von Flügeln (326) drehbar aufzunehmen.

9. Aktive Grillblendenanordnung nach einem der Ansprüche 4 bis 8, wobei das Motorgehäuse (106, 306, 410, 506, 606) ein oberes Ende aufweist, das mit einer oberen Rahmenmittelverbindung verbunden ist, die an dem oberen Rahmenabschnitt (108, 318, 402, 508, 608) zwischen dem ersten Ende und dem zweiten Ende des oberen Rahmenabschnitts (108, 318, 402, 508, 608) verbunden ist, und ein unteres Ende des Motorgehäuses (106, 306, 410, 506, 606) mit dem unteren Rahmenabschnitt (110, 310, 404, 506, 606) an einer unteren Rahmenmittelverbindung verbunden ist, die an dem unteren Rahmenabschnitt (110, 310, 404, 506, 606) zwischen dem ersten Ende und dem zweiten Ende des unteren Rahmenabschnitts (110, 310, 404, 506, 606) ausgebildet ist.

10. Aktive Grillblendenanordnung nach Anspruch 9, wobei die Verbindung zwischen dem Motorgehäuse (106, 306, 410, 506, 606) an der unteren Rahmenmittelverbindung und der oberen Rahmenmittelverbindung jeweils eine ineinandergreifende Schwalbenschwanzverbindung ist, die mit einer Lasche und einem Vorsprung gesichert ist, die mit einem Befestigungselement verbunden sind, wenn die Lasche und der Vorsprung aufeinander ausgerichtet sind.

11. Aktive Grillblendenanordnung nach einem der Ansprüche 4 bis 10, die ferner ein unteres Ende des Motorgehäuses (106, 306, 410, 506, 606) umfasst, das mit dem unteren Rahmenabschnitt (110, 310, 404, 506, 606) an einer unteren Rahmenmittelverbindung verbunden ist, die an dem unteren Rahmenabschnitt (110, 310, 404, 506, 606) zwischen dem ersten Ende und dem zweiten Ende des unteren Rahmenabschnitts (110, 310, 404, 506, 606) ausgebildet ist.

12. Aktive Grillblendenanordnung nach Anspruch 11, wobei die Verbindung zwischen dem Motorgehäuse (106, 306, 410, 506, 606) an der unteren Rahmen-Mittelverbindung eine ineinandergreifende Schwalbenschwanzverbindung ist, die mit einer Lasche und einem Vorsprung gesichert ist, die mit einem Befestigungselement miteinander verbunden sind, wenn die Lasche und der Vorsprung ausgerichtet sind.

13. Aktive Grillblendenanordnung nach einem der Ansprüche 4 bis 12, die ferner eine oder mehrere Brücken (204, 206) umfasst, die sich zwischen dem oberen Rahmenabschnitt (108, 318, 402, 508, 608) und dem unteren Rahmenabschnitt (110, 310, 404, 506, 606) erstreckt, um den oberen Rahmenabschnitt (108, 318, 402, 508, 608) und den unteren Rahmenabschnitt (110, 310, 404, 506, 606) vor der Verbindung der mehreren sekundären Rahmenteile (127, 322, 409, 509, 609) zu stabilisieren.

14. Aktive Grillblendenanordnung nach einem der Ansprüche 2, 3 oder 4 bis 13, wobei sich das Motorgehäuse (106, 306, 410, 506, 606) über die Öffnung (104, 304, 418, 504, 604) des modularen Rahmens (112, 212, 312, 412, 512, 612) erstreckt, die Öffnung (104, 304, 418, 504, 604) in zwei Abschnitte unterteilt, oder wobei sich das Motorgehäuse (106, 306, 410, 506, 606) nicht über die Öffnung (104, 304, 418, 504, 604) des modularen Rahmens (112, 212, 312, 412, 512, 612) erstreckt.

15. Modularer Rahmensatz mit austauschbaren Teilen unterschiedlicher Größen, der verwendet wird, um eine aktive Grillblendenanordnung nach einem der Ansprüche 1 bis 14 zu schaffen, umfassend:
einen ersten modularen Rahmen, einen zweiten modularen Rahmen und einen dritten modularen Rahmen, die jeweils eine unterschiedliche Höhe und Breite aufweisen und aus dem modularen Rahmensatz gebildet sind, der Folgendes umfasst:
einen ausgewählten oberen Rahmenabschnitt (108, 318, 402, 508, 608), ausgewählt aus einer Gruppe, die einen ersten oberen Rahmenabschnitt (108, 318, 402, 508, 608), einen zweiten oberen Rahmen und einen dritten oberen Rahmenabschnitt (108, 318, 402, 508, 608) umfasst, die jeweils unterschiedliche Breiten aufweisen,
einen ausgewählten unteren Rahmenabschnitt (110, 310, 404, 506, 606), der aus einer Gruppe ausgewählt ist, die einen ersten unteren Rahmenabschnitt (110, 310, 404, 506, 606), einen zweiten unteren Rahmen und einen dritten unteren Rahmenabschnitt (110, 310, 404, 506, 606) umfasst, die jeweils unterschiedliche Breiten aufweisen,
ein ausgewähltes Motorgehäuse (106, 306, 410, 506, 606), ausgewählt aus einer Gruppe, die einen ersten Motor, ein zweites Motorgehäuse (106, 306, 410, 506, 606) und ein drittes Motorgehäuse (106, 306, 410, 506, 606) umfasst, die jeweils unterschiedliche Höhen aufweisen,
einen ausgewählten Satz von Endkappen, ausgewählt aus einer Gruppe, die einen ersten Satz von zwei Endkappen, einen zweiten Satz von zwei Endkappen und einen dritten Satz von zwei Endkappen mit jeweils unterschiedlichen Höhen umfasst, und
wobei jeder des einen ausgewählten Satzes von Endkappen mit jeweiligen gegenüberliegenden Enden des einen ausgewählten oberen Rahmenabschnitts (108, 318, 402, 508, 608) und des einen ausgewählten unteren Rahmenabschnitts (110, 310, 404, 506, 606) verbunden ist, die einen rechteckigen Rahmen bilden, und das eine ausgewählte Motorgehäuse (106, 306, 410, 506, 606) zwischen dem einen ausgewählten oberen Rahmenabschnitt (108, 318, 402, 508, 608) und dem einen ausgewählten unteren Rahmenabschnitt (110, 310, 404, 506, 606) verbunden ist.

## Revendications

1. Agencement d'obturateur de grille active ayant un cadre modulaire (112, 212, 312, 412, 512, 612) comprenant :
une pièce de cadre primaire (102, 202, 302, 403, 502, 602) ;
au moins une pièce de cadre secondaire (127, 322, 409, 509, 609) pouvant être connectée à la pièce de cadre primaire (102, 202, 302, 403, 502, 602), dans lequel la pièce de cadre primaire (102, 202, 302, 403, 502, 602) et ladite au moins une pièce de cadre secondaire (127, 322, 409, 509, 609) forment le cadre modulaire (112, 212, 312, 412, 512, 612) ayant au moins une ouverture (104, 304, 418, 504, 604) capable de permettre à l'air de passer à travers le cadre modulaire (112, 212, 312, 412, 512, 612) ; et
une pluralité d'ailettes (326) positionnées en rotation entre ladite au moins une pièce de cadre primaire (102, 202, 302, 403, 502, 602) et ladite au moins une pièce de cadre secondaire (127, 322, 409, 509, 609), **caractérisé en ce que** la pièce de cadre primaire (102, 202, 302, 403, 502, 602) est une pièce unique définissant une largeur et une hauteur d'une ouverture (104, 304, 418, 504, 604) du cadre modulaire (112, 212, 312, 412, 512, 612).

2. Agencement d'obturateur de grille active selon la revendication 1, comprenant en outre :
un carter de moteur (106, 306, 506, 410, 606) formant partie de la pièce de cadre primaire (102, 202, 302, 403, 502, 602) ou de ladite au moins une pièce de cadre secondaire (127, 322, 409, 509, 609) ; et
un moteur connecté au carter de moteur (106, 306, 410, 506, 606), dans lequel le moteur est connecté à la pluralité d'ailettes (326) pour amener la pluralité d'ailettes (326) à être mises en rotation entre une position ouverte, une position fermée et une ou plusieurs positions intermédiaires relativement à l'ouverture (104, 304, 418, 504, 604) du cadre modulaire (112, 212, 312, 412, 512, 612).

3. Agencement d'obturateur de grille active selon la revendication 1 ou 2, comprenant en outre :
- une ailette parmi la pluralité d'ailettes (326) est une ailette d'entraînement connectée au moteur, et la totalité des autres ailettes parmi la pluralité d'ailettes (326) sont connectées à l'ailette d'entraînement via un mécanisme de tringlerie destiné à mettre en rotation la totalité de la pluralité d'ailettes (326) en réponse au moteur mettant en rotation l'ailette d'entraînement ; et/ou
- au moins une jonction de connexion entre la pièce de cadre primaire (102, 202, 302, 403, 502, 602) et ladite au moins une pièce de cadre secondaire (127, 322, 409, 509, 609), dans lequel lesdites au moins une jonction de connexion incluent chacune une jonction à queue-d'aronde d'interverrouillage fixée avec une languette et un bossage ; et/ou
- au moins une jonction de connexion entre la pièce de cadre primaire (102, 202, 302, 403, 502, 602) et la pièce de cadre secondaire (127, 322, 409, 509, 609) ; et une connexion à languette d'encliquetage et à tenon d'encliquetage de capuchon d'extrémité située au niveau de chacune desdites au moins une jonction de connexion entre la pièce de cadre primaire (102, 202, 302, 403, 502, 602) et la pièce de cadre secondaire (127, 322, 409, 509, 609) ; et/ou
- dans lequel chaque ailette parmi la pluralité d'ailettes (326) a deux extrémités avec des cylindres formés sur chacune des deux extrémités ; et des trous formés sur la pièce de cadre primaire (102, 202, 302, 403, 502, 602) et sur la pièce de cadre secondaire (127, 322, 409, 509, 609) pour recevoir en rotation un desdits cylindres d'une ailette parmi la pluralité d'ailettes (326) ; et/ou
- un ou plusieurs ponts (204, 206) sur la pièce de cadre primaire (102, 202, 302, 403, 502, 602) destinés à stabiliser la portion de cadre de pièce de cadre primaire (102, 202, 302, 403, 502, 602) avant la connexion à ladite au moins une pièce de cadre secondaire (127, 322, 409, 509, 609).

4. Agencement d'obturateur de grille active ayant un cadre modulaire (112, 212, 312, 412, 512, 612) comprenant :
une pièce de cadre primaire (102, 202, 302, 403, 502, 602), dans lequel la pièce de cadre primaire (102, 202, 302, 403, 502, 602) a une portion de cadre supérieure (108, 318, 402, 508, 608) ayant une première extrémité et une seconde extrémité, une portion de cadre inférieure (110, 310, 404, 506, 606) ayant une première extrémité et une seconde extrémité, et un carter de moteur (106, 306, 506, 410, 606) s'étendant entre la portion de cadre supérieure (108, 318, 402, 508, 608) et la portion de cadre inférieure (110, 310, 404, 506, 606) ;
une pluralité de pièces de cadre secondaire (127, 322, 409, 509, 609) incluant un premier capuchon d'extrémité, pouvant être connecté à la première extrémité respective de la portion de cadre supérieure (108, 318, 402, 508, 608) et à la première extrémité de la portion de cadre inférieure (110, 310, 404, 506, 606) via une jonction d'extrémité de barre supérieure sur la première extrémité de la portion de cadre supérieur (108, 318, 402, 508, 608) et une jonction d'extrémité de barre inférieure formée sur la première extrémité de la portion de cadre inférieure (110, 310, 404, 506, 606), et un second capuchon d'extrémité de la pluralité de pièces de cadre secondaire (127, 322, 409, 509, 609) pouvant être connecté à la fois à la seconde extrémité de la portion de cadre supérieure et à la seconde extrémité de la portion de cadre inférieure (110, 310, 404, 506, 606) via une jonction d'extrémité de barre supérieure formée sur la seconde extrémité de la portion de cadre supérieure (108, 318, 402, 508, 608) et via une jonction d'extrémité de barre inférieure formée sur la seconde extrémité de la portion de cadre inférieure (110, 310, 404, 506, 606) ;
le cadre modulaire (112, 212, 312, 412, 512, 612) de l'agencement d'obturateur de grille active formé par la connexion de la pièce de cadre primaire (102, 202, 302, 403, 502, 602) et de la pièce de cadre secondaire (127, 322, 409, 509, 609), dans lequel le cadre modulaire (112, 212, 312, 412, 512, 612) définit lesdites une ou plusieurs ouvertures (104, 304, 418, 504, 604) ;
une pluralité d'ailettes (326) positionnées en rotation entre le premier capuchon d'extrémité et le second capuchon d'extrémité, destinées à commander la quantité d'air circulant à travers lesdites une ou plusieurs ouvertures (104, 304, 418, 504, 604) formées par le cadre modulaire (112, 212, 312, 412, 512, 612) ; et
dans lequel le carter de moteur (106, 306, 506, 410, 606) de la pièce de cadre primaire (102, 202, 302, 403, 502, 602) s'étend entre la portion de cadre supérieure (108, 318, 402, 508, 608) et la portion de cadre inférieure (110, 310, 404, 506, 606), **caractérisé en ce que** la pièce de cadre primaire (102, 202, 302, 403, 502, 602) est une pièce unique définissant une largeur et une hauteur d'une ou de plusieurs ouvertures (104, 304, 418, 504, 604) du cadre modulaire (112, 212, 312, 412, 512, 612).

5. Agencement d'obturateur de grille active selon la revendication 4, comprenant en outre :
un moteur connecté au carter de moteur (106, 306, 506, 410, 606), dans lequel le moteur est connecté à la pluralité d'ailettes (326) pour amener la pluralité d'ailettes (326) à être mises en rotation entre une position ouverte, une position fermée et une ou plusieurs positions intermédiaires relativement à l'ouverture (104, 304, 418, 504, 604) du cadre modulaire (112, 212, 312, 412, 512, 612).

6. Agencement d'obturateur de grille active selon la revendication 4 ou 5, comprenant en outre :
une ailette parmi la pluralité d'ailettes (326) est une ailette d'entraînement connectée au moteur et la totalité des autres ailettes parmi la pluralité d'ailettes (326) sont connectées à l'ailette d'entraînement via un mécanisme de tringlerie destiné à mettre en rotation la totalité de la pluralité d'ailettes (326) en réponse au moteur mettant en rotation l'ailette d'entraînement.

7. Agencement d'obturateur de grille active selon l'une quelconque des revendications 4 à 6, dans lequel
- la jonction d'extrémité de barre supérieure formée sur la première extrémité de la portion de cadre supérieure (108, 318, 402, 508, 608), la jonction d'extrémité de barre inférieure formée sur la première extrémité de la portion de cadre inférieure (110, 310, 404, 506, 606), la jonction d'extrémité de barre supérieure formée sur la seconde extrémité de la portion de cadre supérieure (108, 318, 402, 508, 608) et la jonction d'extrémité de barre inférieure formée sur la seconde extrémité de la portion de cadre inférieure (110, 310, 404, 506, 606) incluent chacune une jonction à queue-d'aronde d'interverrouillage fixée avec une languette et un bossage ; ou
- la jonction d'extrémité de barre supérieure formée sur la première extrémité de la portion de cadre supérieure (108, 318, 402, 508, 608), la jonction d'extrémité de barre inférieure formée sur la première extrémité de la portion de cadre inférieure (110, 310, 404, 506, 606), la jonction d'extrémité de barre supérieure formée sur la seconde extrémité de la portion de cadre supérieure (108, 318, 402, 508, 608) et la jonction d'extrémité de barre inférieure formée sur la seconde extrémité de la portion de cadre inférieure (110, 310, 404, 506, 606) incluent chacune une connexion à languette d'encliquetage et à tenon d'encliquetage de capuchon d'extrémité située au niveau de chacun desdits au moins un point de connexion entre la pièce de cadre primaire et la pièce de cadre secondaire (127, 322, 409, 509, 609).

8. Agencement d'obturateur de grille active selon l'une quelconque des revendications 4 à 7, comprenant en outre :
dans lequel chaque ailette parmi la pluralité d'ailettes (326) a deux extrémités avec des cylindres formés sur chacune des deux extrémités ; et
des trous formés sur la pièce de cadre primaire (102, 202, 302, 403, 502, 602) et sur la pièce de cadre secondaire (127, 322, 409, 509, 609) pour recevoir en rotation un desdits cylindres d'une ailette parmi la pluralité d'ailettes (326).

9. Agencement d'obturateur de grille active selon l'une quelconque des revendications 4 à 8, dans lequel le carter de moteur (106, 306, 506, 410, 606) a une extrémité supérieure connectée à une jonction centrale de cadre supérieure formée sur la portion de cadre supérieure (108, 318, 402, 508, 608) entre la première extrémité et la seconde extrémité de la portion de cadre supérieure (108, 318, 402, 508, 608) et une extrémité inférieure du carter de moteur (106, 306, 506, 410, 606) connectée à la portion de cadre inférieure (110, 310, 404, 506, 606) à une jonction centrale de cadre inférieure formée sur la portion de cadre inférieure (110, 310, 404, 506, 606) entre la première extrémité et la seconde extrémité de la portion de cadre inférieure (110, 310, 404, 506, 606).

10. Agencement d'obturateur de grille active selon la revendication 9, dans lequel la connexion entre le carter de moteur (106, 306, 506, 410, 606) au niveau de la jonction centrale de cadre inférieure et de la jonction centrale de cadre supérieure sont chacune une jonction à queue-d'aronde d'interverrouillage fixée avec une languette et un bossage connectés l'une à l'autre avec une fixation quand la languette et le bossage sont alignés.

11. Agencement d'obturateur de grille active selon l'une quelconque des revendications 4 à 10, comprenant en outre une extrémité inférieure du carter de moteur (106, 306, 506, 410, 606) connectée à la portion de cadre inférieure (110, 310, 404, 506, 606) au niveau d'une jonction centrale de cadre inférieure formée sur la portion de cadre inférieure (110, 310, 404, 506, 606) entre la première extrémité et la seconde extrémité de la portion de cadre inférieure (110, 310, 404, 506, 606).

12. Agencement d'obturateur de grille active selon la revendication 11, dans lequel la connexion entre le carter de moteur (106, 306, 506, 410, 606) au niveau de la jonction centrale de cadre inférieure est une jonction à queue-d'aronde d'interverrouillage fixée avec une languette et un bossage connectés l'une à l'autre avec une fixation quand la languette et le bossage sont alignés.

13. Agencement d'obturateur de grille active selon l'une quelconque des revendications 4 à 12, comprenant en outre un ou plusieurs ponts (204, 206) s'étendant entre la portion de cadre supérieure (108, 318, 402, 508, 608) et la portion de cadre inférieure (110, 310, 404, 506, 606) pour stabiliser la portion de cadre supérieure (108, 318, 402, 508, 608) et la portion de cadre inférieure (110, 310, 404, 506, 606) avant la connexion à la pluralité de pièces de cadre secondaire (127, 322, 409, 509, 609).

14. Agencement d'obturateur de grille active selon l'une quelconque des revendications 2, 3 ou 4 à 13, dans lequel le carter de moteur (106, 306, 506, 410, 606) s'étend à travers l'ouverture (104, 304, 418, 504, 604) du cadre modulaire (112, 212, 312, 412, 512, 612), divisant l'ouverture (104, 304, 418, 504, 604) en deux sections, ou dans lequel le carter de moteur (106, 306, 506, 410, 606) ne s'étend pas à travers l'ouverture (104, 304, 418, 504, 604) du cadre modulaire (112, 212, 312, 412, 512, 612).

15. Jeu de cadre modulaire incluant des parties interchangeables de tailles variables, utilisé pour créer un agencement d'obturateur de grille active selon l'une quelconque des revendications 1 à 14, comprenant :
un cadre parmi un premier cadre modulaire, un deuxième cadre modulaire, et un troisième cadre modulaire, ayant chacun une hauteur et une largeur différentes, formés à partir du jeu de cadre modulaire, comprenant :
une portion de cadre supérieure sélectionnée (108, 318, 402, 508, 608) sélectionnée parmi un groupe comprenant une première portion de cadre supérieure (108, 318, 402, 508, 608), une deuxième et une troisième portion de cadre supérieures (108, 318, 402, 508, 608) ayant chacune des largeurs différentes ;
une portion de cadre inférieure sélectionnée (110, 310, 404, 506, 606) sélectionnée parmi un groupe comprenant une première portion de cadre inférieure (110, 310, 404, 506, 606), une deuxième et une troisième portion de cadre inférieures (110, 310, 404, 506, 606) ayant chacune des largeurs différentes ;
un carter de moteur sélectionné (106, 306, 506, 410, 606) sélectionné parmi un groupe comprenant un premier carter de moteur, un deuxième carter de moteur (106, 306, 506, 410, 606) et un troisième carter de moteur (106, 306, 506, 410, 606) ayant chacun des hauteurs différentes ;
un ensemble sélectionné de capuchons d'extrémité sélectionnés parmi un groupe comprenant un premier ensemble de deux capuchons d'extrémité, un deuxième ensemble de deux capuchons d'extrémité et un troisième ensemble de deux capuchons d'extrémité ayant chacun des hauteurs différentes ; et
dans lequel chaque ensemble parmi ledit un ensemble sélectionné de capuchons d'extrémité est connecté à des extrémités opposées respectives de ladite une portion de cadre supérieure sélectionnée (108, 318, 402, 508, 608) et de ladite une portion de cadre inférieure sélectionnée (110, 310, 404, 506, 606) formant un cadre rectangulaire, et ledit un carter de moteur sélectionné (106, 306, 506, 410, 606) est connecté entre ladite une portion de cadre supérieure sélectionnée (108, 318, 402, 508, 608) et ladite une portion de cadre inférieure sélectionnée (110, 310, 404, 506, 606).
